# EUROPÄISCHE PATENTSCHRIFT

(11) **EP 2 685 615 B1**
(45) Veröffentlichungstag und Bekanntmachung des Hinweises auf die Patenterteilung: **24.06.2015**
(21) Anmeldenummer: 12175528.4
(22) Anmeldetag: 09.07.2012
(51) Int. Cl.: H02K 7/04, H02K 15/16, G01M 1/00, H02K 1/27

(54) **Verbessertes Auswuchten eines Rotors**
Improved balancing of a rotor
Equilibrage amélioré d'un rotor

(43) Veröffentlichungstag der Anmeldung: 15.01.2014
(73) Patentinhaber: Siemens Aktiengesellschaft, 80333 München (DE)
(72) Erfinder: Heim, Bruno, 97633 Grosseibstadt (DE)

(56) Entgegenhaltungen:
- EP-A1- 2 149 965
- CA-A1- 2 483 628
- DE-A1- 3 013 704
- DE-A1-102009 008 439
- DE-A1-102009 047 619
- FR-A5- 2 024 091
- US-A1- 2008 272 671
- US-A1- 2009 066 174

## Beschreibung

Die Erfindung betrifft einen Rotor für eine elektrische Maschine, welcher an einer eine erste Endscheibe und an der anderen Stirnseite eine zweite Endscheibe aufweist, wobei die erste Endscheibe und die zweite Endscheibe jeweils eine kreisringförmige Erhebung aufweisen, wobei die kreisringförmige Erhebung jeweils auf jener Stirnseite der jeweiligen Endscheibe angeordnet ist, die jeweils vom Rotor weg weist, wobei die kreisringförmige Erhebung jeweils aus zumindest zwei zur Rotorachse konzentrischen Zylindermänteln und zwischen den Zylindermänteln angeordneten Aussparungen, welche von einander durch Trennelemente abgetrennt sind, gebildet wird, wobei die Aussparungen jeweils derart ausgeformt sind, dass darin jeweils zumindest eine vorgefertigte Wuchtmasse anordenbar ist. Ferner betrifft die Erfindung eine elektrische Maschine mit einem derartigen Rotor.

Ein derartiger Rotor kommt beispielsweise bei Elektromotoren, insbesondere bei Servomotoren und schnell drehenden Motoren zum Einsatz. Oftmals weist der Rotor einer solchen Maschine eine Unwucht auf, beispielsweise eine statische Unwucht, wenn die Masse des Rotors nicht rotationssymmetrisch bezüglich der Rotationsachse verteilt ist. Eine andere Art von Unwucht ist eine dynamische Unwucht, die auftritt, wenn die Rotationsachse des Rotors nicht mit einer der stabilen Hauptträgheitsachsen des Rotors übereinstimmt. Eine Unwucht führt generell zu Vibrationen und erhöhtem Verschleiß und kann die Lager der Maschine beschädigen. Besonders nachteilig bei schnell drehenden Maschinen ist deren Betrieb bei oder nahe einer kritischen Drehzahl, bei welcher die Kräfte der Unwucht Teile der Maschine oder die ganze Maschine in Resonanzschwingungen versetzen.

Um eine Unwucht zu beseitigen, werden beim positiven Auswuchten Ausgleichsmassen auf den Rotor aufgetragen oder beim negativen Auswuchten Massen vom Rotor abgetragen. Bisher werden die Läufer von elektrischen Maschinen oftmals ausgewuchtet, indem eine pastöse Wuchtmasse in den Innenring der Läuferendscheibe aufgeklebt wird.

Läufer mit außen liegenden Magneten werden in der Regel mit Bändern aus reißfesten Materialien bandagiert. Zur Aufnahme von Bandageanfang und Bandageende werden bei geblechten Läufern in der Regel die Endscheiben eingesetzt. Der Bandageanfang und das Bandageende beginnen und enden bei den meisten Läufern wegen des geringen Luftspalts auf Endscheiben. Diese Endscheiben liegen an den Planflächen der Läuferendflächen an. Bedingt durch Längentoleranzen im Blechpaket und Längentoleranzen der Magnete bleiben Spalte zwischen den Magneten und zwischen Magnet und Endscheibe.

Bisher werden die Magnete zwischen den Endscheiben axial verteilt auf der Länge des Läufers aufgebracht. Axiale Spalte sind bisher prozesstechnisch nicht vermeidbar. Bei einseitiger Ausrichtung der Magnete wurden die Magnete einseitig an einer der Endscheiben angelegt und der zwischen den Magneten und der Isolierendscheibe entstandene Spalt wurde teilweise mit einem zusätzlichen Element (ähnlich einem O-Ring) augefüllt. Aufgrund der prozessbedingt nicht vermeidbaren.umlaufenden Spaltbildung zieht sich die unter der Vorspannung aufgebrachte Bandage in Umfangsrichtung partiell zwischen die Magnete bzw. zwischen Magnet und Endscheibe. Durch das partiell in den Spalt eingezogene Bandageband wird die mögliche Zugspannung beim Bandagieren der Läufer begrenzt und Magnete teilweise aus ihrer idealen Lage verschoben.

Aus der DE 10 2009 008 439 A1 ist eine Vorrichtung und Verfahren bekannt, bei welchen zum Auswuchten eines Rotors mindestens eine Wuchtmasse in den Rotor eingeschossen wird.

Aus der DE 102 16 856 B4 ist ein permanentmagneterregter Läufer für eine elektrische Maschine bekannt, welche einen zylindrischen Läufer mit zumindest einer Endscheibe an einer der Stirnflächen des Rotors aufweist. Außerdem sind mehrere Permanentmagnete, die am Außenumfang des Läufers angeordnet sind, und eine Bandage vorgesehen, die um den Rotor derart gewickelt ist, dass sie die Permanentmagnete am Außenumfang des Rotors fixiert.

Aus der FR 2 024 091 A5 ist ein Rotor für eine elektrische Maschine bekannt, wobei der Rotor an seinen beiden axialen enden jeweils einen Ring aufweist. Der jeweilige Ring weist Aussparungen auf, in welche Massen eingebracht werden können.

Aus der 2009/066174 A1 ist eine Permanentmagnet-Rotoranordnung bekannt, wobei axial verlaufende Schlitze vorgesehen sind in welche-durch Zugangsöffnungen Ausgleichsgewichte eingeführt werden können.

Aus der DE 30 13 704 A1 ist ein Auswuchten, glockenförmiger Rotor für eine elektrische Maschine bekannt, wobei der Rotor eine zylindermantelförmige Wicklung und einer an einer Stirnseite derselben befestigten, auf einer Welle festsitzenden Haltescheibe aufweist, wobei an den beiden Stirnseiten der Wicklung jeweils ein Ring aus einem nicht ferromagnetischen Material befestigt ist und wobei die Ringe an ihrem freiliegenden Stirnbereich über ihren Umfang verteilte stirnseitig offene Kammern aufweisen, in die Kugeln festsitzend hineindrückbar sind.

Aus der DE 10 2009 047619 A1 ist ein Rotor für eine Elektromaschine bekannt, umfassend einen Rotorkörper, wenigstens eine Auswuchtscheibe und vorzugsweise Magnete, wobei die wenigstens eine Auswuchtscheibe mit wenigstens einer Befestigungseinrichtung für wenigstens einen Ausgleichskörper zum Auswuchten des Rotors vorgesehen ist.

Der Erfindung liegt die Aufgabe zugrunde, Rotoren für elektrische Maschinen zu schaffen, welche bei besonders hohen Drehzahlen betrieben werden können.

Diese Aufgabe wird bei einem Rotor der eingangs genannten Art sowie einer elektrischen Maschine mit einem Rotor der eingangs genannten Art dadurch gelöst, dass der Rotor mehrere Permanentmagnete aufweist, welche am Außenumfang des Rotors in axial angeordneten Permanentmagnet-Reihen angeordnet sind, wobei die Permanentmagnet-Reihen anhand der beiden Endscheiben in axialer Richtung fixierbar sind und wobei eine Bandage derart um den Rotor gewickelt ist, dass die Permanentmagnete durch die Bandage am Außenumfang des Rotors fixierbar sind, wobei mindestens zwei der Permanentmagnet-Reihen gegeneinander in axialer Richtung versetzt angeordnet sind und wobei die erste Endscheibe und die zweite Endscheibe jeweils eine auf den jeweiligen axialen Enden der Permanentmagnet-Reihen aufliegende Oberfläche aufweisen.

Die kreisringförmige Erhebung weist zumindest zwei zur Rotorachse konzentrische Zylindermäntel auf, welche sich in axialer Richtung vom Rotor weg weisend erheben, wobei zwischen den Zylindermänteln durch Trennelemente voneinander abgetrennte Aussparungen angeordnet sind. Die Aussparungen können insbesondere annähernd quaderförmig sein, wobei die Trennelemente entsprechend als radial nach außen und zwischen den zumindest zwei Zylindermänteln verlaufende Trennwände ausgeführt sind. Weiterhin können die Aussparungen beispielsweise als Sackloch oder Halbkugel ausgeführt sein, so dass Trennelemente zwischen Sacklöchern entsprechend als doppelt konkave Trennwände ausgeführt sind bzw. zwischen Halbkugeln entsprechend ausgeformt sind. Die kreisringförmige Erhebung weist vorzugsweise einen inneren Radius auf, welcher größer ist als der halbe Radius des Läufers, so dass der Effekt der in den Aussparungen anordenbaren Wuchtmassen bezüglich der Unwucht des Rotors besonders groß ist. Besonders vorteilhaft ist, wenn die kreisringförmige Erhebung und somit die anordenbaren Wuchtmassen so weit wie möglich am radialen Rand der jeweiligen Endscheibe angeordnet sind.

Die Aussparungen in den Endscheiben erlauben ein automatisiertes Auswuchten mittels vorgefertigter Wuchtmassen. Dabei können unterschiedliche Wuchtmassen zum Einsatz kommen, was sowohl geometrische Form, Material als auch Masse angeht. Beispielsweise können die Aussparungen als Sacklöcher oder konkave Halbkugeln ausgeführt sein und die Wuchtmassen passenderweise als Zylinder oder (Halb-) Kugeln, die in die Aussparungen eingepresst werden. In Bezug auf die Wuchtmassen sind auch quaderförmige oder andersförmige geometrische Körper denkbar, wobei die Ausnehmungen entsprechend geformt sein müssen, um ein Einbringen in die Endscheibe und anschließend ausreichend festen Sitz der Wuchtmassen in der Endscheibe sicherzustellen.

Zur Auswuchtung des Rotors kann es erforderlich sein, dass in zumindest zwei verschiedene Aussparungen Wuchtmassen mit unterschiedlicher Masse eingebracht werden. Denkbar ist also auch, zur Auswuchtung eines Rotors Wuchtmassen unterschiedlicher Masse und unterschiedlichen Materials einzubringen.

Zur Fixierung der Permanentmagnete auf dem Rotor werden diese zunächst vorfixiert, wobei mindestens zwei der Permanentmagnet-Reihen in axialer Richtung gegeneinander versetzt angeordnet werden. Die Vorfixierung dient lediglich der Kompensation der Gewichtskraft der Permanentmagnete. Anschließend werden die erste Endscheibe und die zweite Endscheibe an den beiden Stirnseiten des Rotors angebracht. Denkbar ist auch, zunächst die beiden Endscheiben am Rotor anzubringen und anschließend die Permanentmagnete auf dem Rotor zu fixieren. Die beiden Endscheiben weisen jeweils eine in axialer Richtung den Permanentmagnet-Reihen zugewandte Oberfläche auf, welche in Umfangsrichtung gestuft ausgeführt ist.

Dabei gibt es eine Zuordnung von einer in axialer Richtung höheren Stufe beispielsweise der ersten Endscheibe zu einer Permanentmagnet-Reihe, welche im Vergleich zu anderen Permanentmagnet-Reihen axial eingerückt ist. D.h. das axiale Ende jener eingerückten Permanentmagnet-Reihe ist im Vergleich zu anderen Permanentmagnet-Reihen weiter von jener Stirnfläche des Rotors entfernt, auf der die erste Endscheibe aufliegt.

Durch die gestufte Kontur an der jeweiligen Magnetanlagefläche der Endscheiben werden die Magnete leicht axial versetzt positioniert. Mit den Endscheiben können die Magnete axial zumindest nahezu spaltfrei angedrückt werden, wobei durch die in axialer Richtung versetzte Anordnung von mindestens zwei der Permanentmagnet-Reihen ein durchgehender Spalt in Umfangsrichtung verhindert werden kann. Durch die axial versetzte Anordnung von zumindest zwei der Permanentmagnet-Reihen entstehen in Umfangsrichtung, d. h. in Bandagezugrichtung, keine durchgehenden Spalte und die Magnete werden durch die Endscheibe zumindest nahezu spaltfrei auf Block gedrückt.

Werden die Endscheiben spritztechnisch hergestellt, so liegt die jeweilige Endscheibe nahezu bündig und plan am jeweiligen axialen Ende des Rotors ohne Endscheiben an. Somit wird also die Ausdehnung von Spalten zwischen den Endscheiben und den axialen Enden der versetzten Permanentmagnet-Reihen stark vermindert. Wie oben erwähnt, ermöglicht diese Art der Herstellung im Bereich des axialen Endes des Rotors eine Formgebung mit kleinem Radius im Vergleich mit dem Biegeradius einer gestanzten Endscheibe, so dass die Ausdehnung eines Spaltes zwischen der jeweiligen Endscheibe und dem axialen Ende des Rotors stark vermindert werden kann. Ein vergleichsweise großer, durch den Biegeradius bedingter Spalt, wie beispielsweise bei einer geprägten Endscheibe, wird damit vermieden.

Aufgrund dieser Positionierung der Permanentmagnete können im Folgearbeitsgang höhere Bandagezüge realisiert werden. Dies kommt dadurch zustande, dass das Bandageband weniger leicht beschädigt werden kann, da Spalte in Umfangsrichtung zwischen Permanentmagneten kürzer sind und vor allem durchgehende Spalte, die sich um den gesamten Umfang des Rotors erstrecken, komplett vermieden werden. Somit ist es möglich, die Bandage entsprechend dem eingesetzten Bandageband mit der maximal zulässigen Vorspannkraft auf den Läufer aufzubringen, ohne dass partiell Teile der Bandage in Spalte gezogen werden und Magnete aus ihrer Ideallage verschoben werden.

Auch Eingreiferhebungen auf der jeweiligen Endscheibe, wobei die Eingreiferhebungen in axial verlaufende Bohrungen im Rotor eingreifen können und beispielsweise zylinderförmig, ringförmig oder kegelförmig oder dergleichen ausgestaltet sind, fixieren die Endscheiben in Umfangsrichtung und radial in den Trägheitsbohrungen des Rotors. Beim Bandagieren kann somit die Vorspannkraft über die Endscheibe auf die Endscheibe aufgebracht werden, was höhere Bandagezüge erlaubt.

Dank der erreichbaren höheren Bandagezüge wird die radiale Fixierung der Permanentmagnete verbessert, weil die Bandage größere nach radial außen gerichtete Fliehkräfte während des Betriebs des Rotors aufnehmen kann. Somit werden höhere Maximaldrehzahlen des Rotors und einer elektrischen Maschine mit solch einem Rotor ermöglicht.

Bei einer vorteilhaften Ausgestaltung der Erfindung weist der Rotor axial verlaufende Bohrungen auf, wobei die erste Endscheibe und die zweite Endscheibe jeweils Eingreiferhebungen auf der zum Rotor hin weisenden Stirnseite aufweisen, wobei die Eingreiferhebungen auf der jeweiligen Endscheibe derart angeordnet sind, dass sie in die axial verlaufenden Bohrungen des Rotors eingreifen können.

Die axial verlaufenden Bohrungen dienen dazu, die Masse des Rotors und damit vor allem das Trägheitsmoment des Rotors zu verringern. Die Bohrungen, auch als Trägheitsbohrungen bezeichnet, können derart ausgeführt werden, dass sie den Rotor ohne Endscheiben komplett durchdringen. Die Eingreiferhebungen der beiden Endscheiben bilden jeweils eine erhobene Kontur, wobei die Kontur während der Montage und in eingebautem Zustand in die Trägheitsbohrungen des Rotors eingreift und so die Endscheiben in Umfangsrichtung und radial fixiert. Die Eingreiferhebungen können beispielsweise zylinderförmig, ringförmig oder kegelförmig oder dergleichen ausgebildet sein. Die Ausgestaltung der Eingreiferhebungen muss allerdings derart sein, dass bei der jeweiligen Endscheibe im eingebauten Zustand die Eingreiferhebungen in die jeweilige Trägheitsbohrung eingreifen kann.

Bei einer weiteren vorteilhaften Ausgestaltung der Erfindung sind die erste Endscheibe und die zweite Endscheibe aus Kunststoff und die vorgefertigte Wuchtmasse aus Metall oder einer Legierung.

Die Endscheiben können insbesondere aus Thermoplasten oder Duroplasten bestehen und die Wuchtmassen aus metallischen Werkstoffen oder Legierungen, wie zum Beispiel Stahl. Dies erlaubt in besonderem Maße die Automatisierung des Auswuchtprozesses durch automatisiertes Einbringen der Wuchtmassen in die Endscheiben.

Werden die Endscheiben aus Kunststoff spritztechnisch hergestellt, so können die Endscheiben jeweils bündig am jeweiligen axialen Ende des Rotors ohne Endscheiben anliegen. Denn diese Art der Herstellung ermöglicht im Bereich des axialen Endes des Rotors eine Formgebung der Endscheibe mit kleinerem Radius als der Biegeradius einer gestanzten Endscheibe, so dass durch spritztechnisch hergestellte Kunststoff-Endscheiben die Ausdehnung eines Spaltes zwischen der jeweiligen Endscheibe und dem axialen Ende des Rotors stark vermindert werden kann.

Bei einer vorteilhaften Ausgestaltung der Erfindung sind jeweils in Umfangsrichtung nächst benachbarte Permanentmagnet-Reihen gegeneinander in axialer Richtung versetzt angeordnet. Durch die in axialer Richtung versetzte Anordnung von jeweils in Umfangsrichtung nächst benachbarten Permanentmagnet-Reihen werden Spalte in Umfangsrichtung und zwischen Permanentmagneten auf die kleinstmögliche Länge reduziert, weil ein solcher Spalt der Breite in Umfangsrichtung einer einzigen Permanentmagnet-Reihe, ggf. zuzüglich der Breite der axialen Spalte, entspricht. Diese Anordnung der Permanentmagnet-Reihen vermeidet deshalb besonders effektiv Spalte in Umfangsrichtung, welche die Bandagierung beschädigen könnten. Damit wird die radiale Fixierung der Permanentmagnete weiter verbessert, was besonders hohe Rotordrehzahlen ermöglicht.

Bei einer weiteren vorteilhaften Ausgestaltung der Erfindung sind jeweils in Umfangsrichtung übernächst benachbarte Permanentmagnet-Reihen gegeneinander in axialer Richtung versetzt angeordnet. Ein axialer Versatz zwischen jeweils in Umfangsrichtung übernächst benachbarten Permanentmagnet-Reihen ermöglicht im Vergleich zur vorherigen Ausführungsform eine Verlängerung des in Umfangsrichtung befindlichen Spaltes zwischen Permanentmagneten, wobei ein derartiger Spalt bei bestimmten Anwendungen schon ausreicht. Insbesondere jedoch in Kombination mit einem Versatz zwischen jeweils in Umfangsrichtung nächst benachbarten Permanentmagnet-Reihen wird eine besonders vorteilhafte Wirkung erzielt, da ein Bandägeband während eines vollen Umlaufs um den Rotor besonders kurze Spalte in Umfangsrichtung abdeckt und gleichzeitig nur jeder dritte Spalt in Umfangsrichtung an der gleichen axialen Position auftritt.

Denkbar sind insbesondere auch andere Anordnungen der Permanentmagnet-Reihen. Beispielsweise können auch in Umfangsrichtung noch weiter entfernte Permanentmagnet-Reihen gegeneinander versetzt angeordnet sein.

Bei einer vorteilhaften Ausgestaltung der Erfindung ist der Durchmesser des Rotors samt den darauf angeordneten Permanentmagneten mindestens so groß wie der Durchmesser der Endscheiben. Insbesondere durch Endscheiben mit einem etwas kleineren Durchmesser im Vergleich zum Rotor mit darauf angebrachten Permanentmagneten wird die Bandagierung des Rotors vereinfacht.

Im Folgenden wird die Erfindung anhand der in den Figuren dargestellten Ausführungsbeispiele näher beschrieben und erläutert. Es zeigen:
- FIG 1: eine perspektivische Darstellung einer Ausführungsform einer Endscheibe des erfindungsgemäßen Rotors,
- FIG 2: eine perspektivische Darstellung einer weiteren Ausführungsform einer Endscheibe des erfindungsgemäßen Rotors,
- FIG 3: eine perspektivische Darstellung einer weiteren Ausführungsform einer Endscheibe des erfindungsgemäßen Rotors,
- FIG 4: eine perspektivische Darstellung einer Ausführungsform des erfindungsgemäßen Rotors, und
- FIG 5: eine schematische Darstellung einer Ausführungsform der erfindungsgemäßen Vorrichtung.

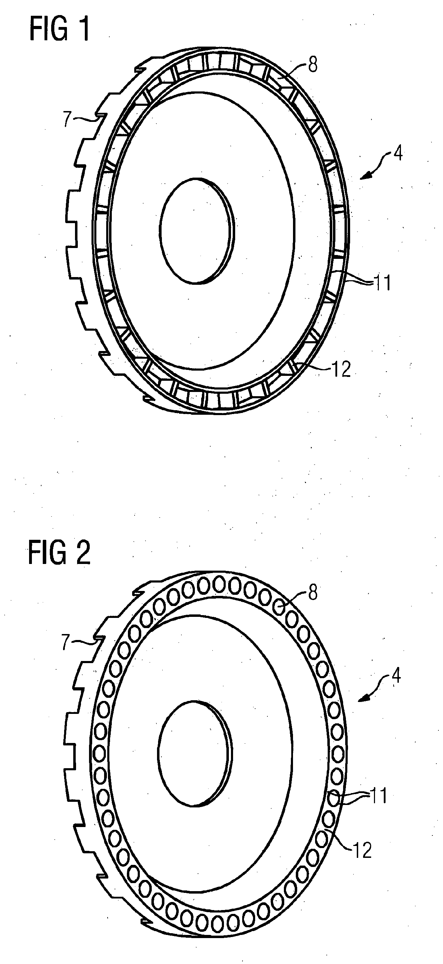

Figur 1 zeigt eine perspektivische Darstellung einer Ausführungsform einer ersten Endscheibe 4 des erfindungsgemäßen Rotors 1. Die Endscheibe 4 weist eine kreisringförmige Erhebung auf, welche aus zwei zur Rotorachse konzentrischen Zylindermänteln 11 sowie zwischen den Zylindermänteln 11 durch _{T}rennelemente 12 voneinander abgetrennte Aussparungen 8 gebildet wird. Die Aussparungen 8 sind annähernd quaderförmig und die Trennelemente 12 als Trennwände ausgeführt, die jeweils zwischen den zwei Zylindermänteln 11 sowie zwischen zwei Aussparungen 8 angeordnet sind. Die Aussparungen 8 sind am radial äußeren Rand der Endscheibe 4 auf jener Stirnseite der Endscheibe 4 angeordnet ist, die vom Rotor 1 weg weist. In die Aussparungen 8 können zum Zwecke der Auswuchtung des Rotors 1 vorgefertigte Wuchtmassen 20 eingebracht werden, beispielsweise eingepresst werden. Da die Aussparungen 8 im Rahmen dieses Ausführungsbeispiels annähernd quaderförmig sind, können beispielsweise quaderförmige, aber auch andersförmige Wuchtmassen 20 in diese Aussparungen 8 eingebracht werden, wie zum Beispiel auch Wuchtkit.

Weiterhin weist die Endscheibe 4 im Rahmen des Ausführungsbeispiels eine gestufte Kontur in Form einer Oberfläche 7 auf, welche im eingebauten Zustand auf den versetzt angeordneten Permanentmagnet-Reihen 3 aufliegt. Für in Figur 1 nicht dargestellte Gegenstände siehe die weiteren Figuren.

Figur 2 zeigt eine perspektivische Darstellung einer weiteren Ausführungsform einer ersten Endscheibe 4 des erfindungsgemäßen Rotors 1. Gleiche Bezugszeichen wie in Figur 1 bezeichnen in Figur 2 gleiche Gegenstände. Die Aussparungen 8 weisen nunmehr jeweils die Form eines Sacklochs auf, so dass zum Zwecke der Auswuchtung des Rotors 1 vorzugsweise zylinderförmige oder kugelförmige Wuchtmassen 20 oder Wuchtkit in die Aussparungen eingebracht werden kann. Die Aussparungen 8 können beispielsweise auch als Halbkugel ausgeführt werden. Entsprechend sind die Trennelemente 12, welche die halbkugelförmigen Aussparungen 8 voneinander abtrennen, als in Umfangsrichtung doppelt konkave Trennwände ausgeführt.

Weiterhin können die Aussparungen beispielsweise als Sackloch oder Halbkugel ausgeführt sein, so dass Trennelemente zwischen Sacklöchern entsprechend als doppelt konkave Trennwände ausgeführt sind bzw. zwischen Halbkugeln entsprechend ausgeformt sind.

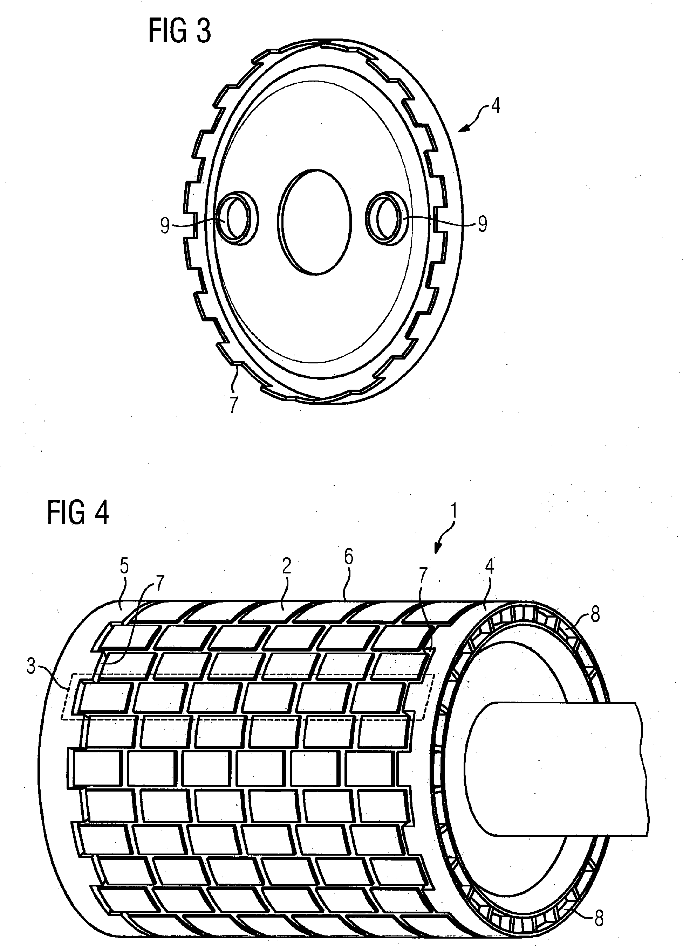

Figur 3 zeigt eine perspektivische Darstellung einer weiteren Ausführungsform einer Endscheibe 4 des erfindungsgemäßen Rotors 1. Gleiche Bezugszeichen wie in Figur 1 bezeichnen in Figur 3 gleiche Gegenstände. Die Endscheibe 4 weist zwei ringförmige Eingreiferhebungen 9 auf, die in nicht näher dargestellte Trägheitsbohrungen des Rotors 1 eingreifen können. Die Eingreiferhebungen 9 können insbesondere auch zylinderförmig, kegelförmig oder dergleichen ausgeführt sein und bewirken im eingebauten Zustand der Endscheibe 4, dass die Endscheibe 4 radial und in Umfangsrichtung fixiert ist. Auch eine axiale Fixierung in Richtung zum Rotor 1 ohne Endscheibe 4 ist damit gegeben. Bei der Endscheibe 4 kann es sich um eine der in Figuren 1 oder 2 dargestellte Ausführungsformen oder alternativen Ausführungsformen handeln.

Figur 4 zeigt eine perspektivische Darstellung einer Ausführungsform des erfindungsgemäßen Rotors 1. Der Rotor 1 ist zylinderförmig ausgeführt und weist an einer Stirnseite eine erste Endscheibe 4 und an der anderen Stirnseite eine zweite Endscheibe 5 auf. Weiterhin weist der Rotor 1 einen Außenumfang 6 auf, auf welchem Permanentmagnete 2 in axial angeordneten Permanentmagnet-Reihen 3 angeordnet sind. Nicht dargestellt ist eine Bandage, welche um den Rotor 1 gewickelt wird und welche die Permanentmagnete 2 am Außenumfang 6 des Rotors 1 in radialer Richtung fixiert.

Die Permanentmagnet-Reihen 3 sind derart angeordnet, dass jeweils in Umfangsrichtung benachbarte Permanentmagnet-Reihen 3 axial gegeneinander versetzt sind. Somit weisen benachbarte Permanentmagnet-Reihen 3 auch an ihrem jeweiligen axialen Ende einen Versatz auf. Die erste Endscheibe 4 und die zweite Endscheibe 5 sind derart ausgeführt, dass sie jeweils über eine zu den Permanentmagnet-Reihen 3 weisende und auf dem Ende der Permanentmagnet-Reihen 3 aufliegende Oberfläche 7 verfügen. Die jeweilige auf den jeweiligen axialen Enden der Permanentmagnet-Reihen 3 aufliegende Oberfläche 7 fixiert die vorfixierten Permanentmagnete 2 in axialer Richtung und ermöglicht eine axial nahezu spaltfreie Positionierung der Permanentmagnete 2. Durch den axialen Versatz der Permanentmagnet-Reihen 3 wird ein durchgehender Spalt in Umfangsrichtung verhindert, so dass beim Bandagieren des Rotors 1 Beschädigungen des Bandagebandes vermieden werden. Dies ermöglicht letzten Endes höhere Bandagezüge und somit eine bessere radiale Fixierung der Permanentmagnete 2, was höhere Rotordrehzahlen erlaubt.

Die Endscheibe 4 weist Aussparungen 8 auf, welche in der Nähe des äußeren radialen Rands der Endscheibe 4 auf jener Stirnseite der Endscheibe 4 angeordnet ist, die vom Rotor 1 weg weist. In die Aussparungen 8 können zum Zwecke der Auswuchtung des Rotors 1 vorgefertigte Wuchtmassen 20 eingebracht werden, beispielsweise eingepresst werden. Da die Aussparungen 8 im Rahmen dieses Ausführungsbeispiels annähernd quaderförmig sind, können beispielsweise quaderförmige, aber auch andersförmige Wuchtmassen 20 in diese Aussparungen 8 eingebracht werden, wie zum Beispiel auch Wuchtkit. Die zweite Endscheibe 5 weist ebenfalls Aussparungen 8 zum Zwecke der Auswuchtung auf.

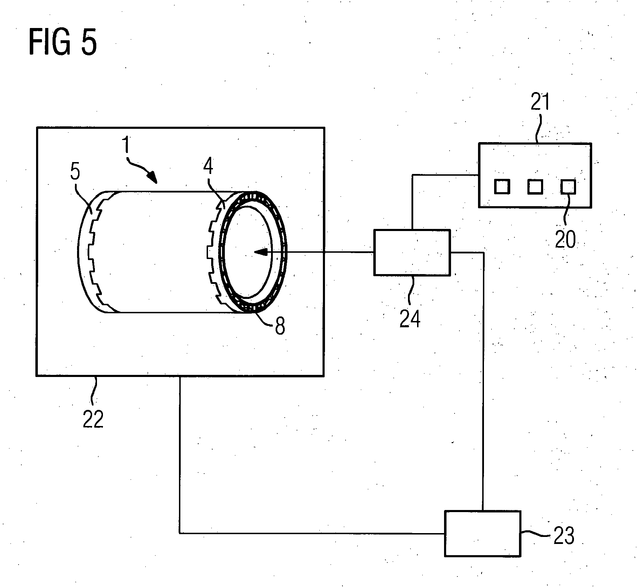

Figur 5 zeigt eine schematische Darstellung einer Ausführungsform der erfindungsgemäßen Vorrichtung. Die Vorrichtung zum Auswuchten eines Rotors 1, welcher eine erste Endscheibe 4 und eine zweite Endscheibe 5 sowie Aussparungen 8 aufweist, umfasst eine Aufnahmevorrichtung 21, in welcher vorgefertigte Wuchtmassen 20 vorrätig sind. Der Rotor 1 kann eine Unwucht aufweisen, welche zum Beispiel durch Rotationsversuche anhand einer Messeinrichtung 22 gemessen wird (in die darstellungsgemäß der Rotor 1 eingeführt ist).

Mit der Messeinrichtung 22 ist eine Berechnungsvorrichtung 23 verbunden, welche aus der gemessenen Unwucht des Rotors 1 eine Position berechnen kann, die einer der Aussparungen 8 der ersten Endscheibe 4 oder der zweiten Endscheibe 5 entspricht. Die berechnete Position der Aussparung 8 wird dabei durch die Berechnungsvorrichtung 23 derart berechnet, dass eine vorgefertigte Wuchtmasse 20, die in jene Aussparung 8 eingebracht wird, die Unwucht des Rotors 1 kompensiert bzw. teilweise kompensiert. Vorgesehen ist weiterhin eine Einbringvorrichtun^{g} 24, welche die Wuchtmassen 20 in die von der Berechnungsvorrichtung 23 berechneten Aussparung 8 des Rotors 1 einbringt.

Ist eine vollständige Kompensation der Unwucht des Rotors 1 noch nicht erreicht, so wird gegebenenfalls die Messung der Unwucht wiederholt, zumindest aber eine weitere Position einer Aussparung 8 berechnet, in welche anschließend ebenfalls eine Wuchtmasse 20 eingebracht wird, um die Unwucht des Rotors 1 zu kompensieren bzw. teilweise zu kompensieren. Nötigenfalls wird diese Prozedur so oft wiederholt, bis zufriedenstellende Ergebnisse erreicht werden.

Zusammenfassend betrifft die Erfindung einen Rotor, welcher an einer eine erste Endscheibe und an der anderen Stirnseite eine zweite Endscheibe aufweist, wobei die erste Endscheibe und die zweite Endscheibe jeweils eine kreisringförmige Erhebung aufweisen, wobei die kreisringförmige Erhebung jeweils auf jener Stirnseite der jeweiligen Endscheibe angeordnet ist, die jeweils vom Rotor weg weist, wobei die kreisringförmige Erhebung jeweils aus zumindest zwei zur Rotorachse konzentrischen Zylindermänteln und zwischen den Zylindermänteln angeordneten Aussparungen, welche von einander durch Trennelemente abgetrennt sind, gebildet wird, wobei die Aussparungen jeweils derart ausgeformt sind, dass darin jeweils zumindest eine vorgefertigte Wuchtmasse anordenbar ist. Ferner betrifft die Erfindung eine elektrische Maschine mit einem derartigen Rotor. Um Rotoren für elektrische Maschinen zu schaffen, welche bei besonders hohen Drehzahlen betrieben werden können, wird vorgeschlagen, dass der Rotor mehrere Permanentmagnete aufweist, welche am Außenumfang des Rotors in axial angeordneten Permanentmagnet-Reihen angeordnet sind, wobei die Permanentmagnet-Reihen anhand der beiden Endscheiben in axialer Richtung fixierbar sind und wobei eine Bandage derart um den Rotor gewickelt ist, dass die Permanentmagnete durch die Bandage am Außenumfang des Rotors fixierbar sind, wobei mindestens zwei der Permanentmagnet-Reihen gegeneinander in axialer Richtung versetzt angeordnet sind und wobei die erste Endscheibe und die zweite Endscheibe jeweils eine auf den jeweiligen axialen Enden der Permanentmagnet-Reihen aufliegende Oberfläche aufweisen.

## Patentansprüche

1. Rotor (1) für eine elektrische Maschine,
welcher an einer eine erste Endscheibe (4) und an der anderen Stirnseite eine zweite Endscheibe (5) aufweist,
wobei die erste Endscheibe (4) und die zweite Endscheibe (5) jeweils eine kreisringförmige Erhebung aufweisen,
wobei die kreisringförmige Erhebung jeweils auf jener Stirnseite der jeweiligen Endscheibe (4, 5) angeordnet ist, die jeweils vom Rotor (1) weg weist,
wobei die kreisringförmige Erhebung jeweils aus zumindest zwei zur Rotorachse konzentrischen Zylindermänteln (11) und zwischen den Zylindermänteln (11) angeordneten Aussparungen (8), welche von einander durch Trennelemente (12) abgetrennt sind, gebildet wird,
wobei die Aussparungen (8) jeweils derart ausgeformt sind, dass darin jeweils zumindest eine vorgefertigte Wuchtmasse (20) anordenbar ist,
**gekennzeichnet durch**
mehrere Permanentmagnete (2), welche am Außenumfang (6) des Rotors (1) in axial angeordneten Permanentmagnet-Reihen (3) angeordnet sind,
wobei die Permanentmagnet-Reihen (3) anhand der beiden Endscheiben (4, 5) in axialer Richtung fixierbar sind und
wobei eine Bandage derart um den Rotor (1) gewickelt ist, dass die Permanentmagnete (2) **durch** die Bandage am Außenumfang (6) des Rotors (1) fixierbar sind,
wobei mindestens zwei der Permanentmagnet-Reihen (3) gegeneinander in axialer Richtung versetzt angeordnet sind und wobei die erste Endscheibe (4) und die zweite Endscheibe (5) jeweils eine auf den jeweiligen axialen Enden der Permanentmagnet-Reihen (3) aufliegende Oberfläche (7) aufweisen.

2. Rotor (1) nach Anspruch 1,
wobei der Rotor (1) axial verlaufende Bohrungen aufweist, wobei die erste Endscheibe (4) und die zweite Endscheibe (5) jeweils Eingreiferhebungen (9) auf der zur jeweils anderen Endscheibe (4,5) hin weisenden Stirnseite aufweisen,
wobei die Eingreiferhebungen (9) auf der jeweiligen Endscheibe (4, 5) derart angeordnet sind, dass sie in die axial verlaufenden Bohrungen des Rotors (1) eingreifen können.

3. Rotor (1) nach einem der vorhergehenden Ansprüche,
wobei die erste Endscheibe (4) und die zweite Endscheibe (5) aus Kunststoff sind und die zumindest eine vorgefertigte Wuchtmasse (20) aus Metall oder einer Legierung ist.

4. Rotor (1) nach einem der vorhergehenden Ansprüche,
wobei jeweils in Umfangsrichtung nächst benachbarte Permanentmagnet-Reihen (3) gegeneinander in axialer Richtung versetzt angeordnet sind.

5. Rotor (1) nach Anspruch 4,
wobei jeweils in Umfangsrichtung übernächst benachbarte Permanentmagnet-Reihen (3) gegeneinander in axialer Richtung versetzt angeordnet sind.

6. Rotor (1) nach Anspruch 4 oder 5,
wobei der Durchmesser des Rotors (1) samt den darauf angeordneten Permanentmagneten (2) mindestens so groß wie der Durchmesser der Endscheiben (4, 5) ist.

7. Elektrische Maschine mit einem Rotor (1) nach einem der vorhergehenden Ansprüche.

## Claims

1. Rotor (1) for an electric machine,
which at one end face has a first end plate (4) and at the other end face has a second end plate (5),
wherein the first end plate (4) and the second end plate (5) each have an annular elevation,
wherein the annular elevation is in each case arranged on that end face of the respective end plate (4, 5) which in each case points away from the rotor (1),
wherein the annular elevation is in each case formed from at least two cylinder jackets (11) concentric to the rotor axis and recesses (8) which are arranged between the cylinder jackets (11) and are separated from each other by separators (12),
wherein the recesses (8) are each formed such that in each case at least one prefabricated balancing mass (20) can be arranged therein,
**characterised by**
a plurality of permanent magnets (2) which are arranged on the outer circumference (6) of the rotor (1) in axially arranged rows of permanent magnets (3),
wherein the rows of permanent magnets (3) can be fixed in the axial direction on the basis of the two end plates (4,5) and wherein a binding band is wound around the rotor (1) such that the permanent magnets (2) can be fixed by the binding band on the outer circumference (6) of the rotor (1),
wherein at least two of the rows of permanent magnets (3) are arranged opposite and offset from one another in the axial direction and
wherein the first end plate (4) and the second end plate (5) each have a surface (7) lying on the respective axial ends of the rows of permanent magnets (3).

2. Rotor (1) according to claim 1,
wherein the rotor (1) has axially extending bores,
wherein the first end plate (4) and the second end plate (5) each have engaging projections (9) on the end face pointing towards the other end plate (4,5) in each case,
wherein the engaging projections (9) are arranged on the respective end plate (4,5) such that they can engage with the axially extending bores of the rotor (1).

3. Rotor (1) according to one of the preceding claims,
wherein the first end plate (4) and the second end plate (5) are made of plastic and the at least one prefabricated balancing mass (20) is made of metal or an alloy.

4. Rotor (1) according to one of the preceding claims,
wherein in each case rows of permanent magnets (3) adjacent to one another in the circumferential direction are arranged opposite and offset from one another in the axial direction.

5. Rotor (1) according to claim 4,
wherein in each case rows of permanent magnets (3) adjacent but one to one another in the circumferential direction are arranged opposite and offset from one another in the axial direction.

6. Rotor (1) according to claim 4 or 5,
wherein the diameter of the rotor (1) together with the permanent magnets (2) arranged thereon is at least as large as the diameter of the end plates (4, 5).

7. Electrical machine having a rotor (1) according to one of the preceding claims.

## Revendications

1. Rotor ( 1 ) pour une machine électrique,
qui a, à un premier côté frontal, un premier ( 4 ) disque d'extrémité et, à l'autre côté frontal, un deuxième disque ( 5 ) d'extrémité,
dans lequel le premier disque ( 4 ) d'extrémité et le deuxième disque ( 5 ) d'extrémité ont respectivement une surélévation en forme d'anneau de cercle,
dans lequel la surélévation en forme d'anneau de cercle est disposée du côté frontal du disque ( 4, 5 ) d'extrémité respectif, qui est éloigné respectivement du rotor ( 1 ),
dans lequel la surélévation en forme d'anneau de cercle est formée respectivement d'au moins deux enveloppes ( 11 ) cylindriques concentriques à l'axe du rotor et d'évidements ( 8 ), qui sont disposés entre les enveloppes ( 11 ) cylindriques et qui sont séparés les uns des autres par des éléments ( 12 ) de séparation,
dans lequel les évidements ( 8 ) sont formés respectivement de manière à pouvoir y mettre respectivement au moins une masselotte de balourd fabriquée à l'avance,
**caractérisé par**
plusieurs aimants ( 2 ) permanents, qui sont disposés sur le pourtour ( 6 ) extérieur du rotor ( 1 ), en rangées ( 3 ) disposées axialement d'aimants permanents,
dans lequel les rangées ( 3 ) d'aimants permanents peuvent être immobilisées dans la direction axiale, à l'aide des deux disques ( 4, 5 ) d'extrémité et un bandage est enroulé autour du rotor ( 1 ), de manière à pouvoir immobiliser les aimants ( 2 ) permanents par le bandage sur le pourtour ( 6 ) extérieur du rotor ( 1 ),
dans lequel au moins deux des rangées ( 3 ) d'aimants permanents sont disposées de manière décalée l'une par rapport à l'autre dans la direction axiale et
dans lequel le premier disque ( 4 ) d'extrémité et le deuxième disque ( 5 ) d'extrémité ont respectivement une surface ( 7 ) s'appliquant aux extrémités axiales respectives des rangées ( 3 ) d'aimants permanents.

2. Rotor ( 1 ) suivant la revendication 1,
dans lequel le rotor ( 1 ) a des trous s'étendant axialement, le premier disque ( 4 ) d'extrémité et le deuxième disque ( 5 ) d'extrémité ayant respectivement des protubérances ( 9 ) de préhension sur la surface frontale tournée respectivement vers l' autre disque ( 4, 5 ) d'extrémité,
les protubérances ( 9 ) de préhension étant disposées sur le disque ( 4, 5 ) d'extrémité respectif, de manière à ce qu'elle puissent pénétrer dans les trous s'étendant axialement du rotor ( 1 ).

3. Rotor ( 1 ) suivant l'une des revendications précédentes,
dans lequel le premier disque ( 4 ) d'extrémité et le deuxième disque ( 5 ) d'extrémité sont en matière plastique et la au moins une masselotte ( 20 ) de balourd, fabriquée à l'avance, est en métal ou est en un alliage.

4. Rotor ( 1 ) suivant l'une des revendications précédentes,
dans lequel des rangées ( 3 ) d'aimants permanents, immédiatement voisines dans la direction périphérique, sont décalées les unes par rapport aux autres dans la direction axiale.

5. Rotor ( 1 ) suivant la revendication 4,
**caractérisé en ce que** des rangées ( 3 ) d'aimants permanents, venant immédiatement après celles immédiatement voisines dans la direction périphérique, sont décalées les unes par rapport aux autres dans la direction axiale.

6. Rotor ( 1 ) suivant la revendication 4 ou 5,
dans lequel le diamètre du rotor ( 1 ), ensemble avec les aimants ( 2 ) permanents qui y sont disposés, est au moins aussi grand que le diamètre des disques ( 4, 5 ) d'extrémité.

7. Machine électrique ayant un rotor ( 1 ) suivant l'une des revendications précédentes.
